## Europäisches Patentamt
## European Patent Office
## Office européen des brevets

(19)

(11) Numéro de publication: **0 016 678**
**B1**

(12)
# FASCICULE DE BREVET EUROPEEN

(45) Date de publication du fascicule du brevet:
**07.03.84**

(51) Int. Cl.³: **H 04 L 7/02, H 04 L 25/52**

(21) Numéro de dépôt: **80400299.6**

(22) Date de dépôt: **04.03.80**

(54) **Dispositif de reconstitution d'horloge.**

(30) Priorité: **26.03.79 FR 7907536**

(43) Date de publication de la demande:
**01.10.80 Bulletin 80/20**

(45) Mention de la délivrance du brevet:
**07.03.84 Bulletin 84/10**

(84) Etats contractants désignés:
**BE DE GB IT SE**

(56) Documents cités:
**US - A - 3 266 024**
**US - A - 3 576 570**

(73) Titulaire: **THOMSON-CSF TELEPHONE, 146, Boulevard de Valmy, F-92707 Colombes (FR)**

(72) Inventeur: **Athenes, Claude, "THOMSON-CSF" SCPI - 173, bld Haussmann, F-75360 Paris Cedex 08 (FR)**
Inventeur: **Salle, Jacques Edmond, "THOMSON-CSF" SCPI - 173, bld Haussmann, F-75360 Paris Cedex 08 (FR)**
Inventeur: **Blouin, Philippe, "THOMSON-CSF" SCPI - 173, bld Haussmann, F-75360 Paris Cedex 08 (FR)**

(74) Mandataire: **Thrierr, Françoise et al, THOMSON-CSF SCPI 173, Bld Haussmann, F-75379 Paris Cedex 08 (FR)**

ACTORUM AG

# Dispositif de reconstitution d'horloge

L'invention concerne un dispositif de reconstitution d'horloge pour récepteur de transmission de données numériques.

Pour prélever au bon moment l'information présente à l'entrée, un récepteur de données doit nécessairement comporter un dispositif capable de reconstituer le signal d'horloge distant.

En transmission de données, on appelle horloge distante l'horloge du dispositif émetteur de données au rythme de laquelle les données ont été émises. Le récepteur est muni d'une horloge locale dont la fréquence nominale f est la même que celle de l'horloge distante à la précision des horloges près; on peut réaliser ces horloges locales, par exemple, à l'aide d'oscillateurs à quartz avec une précision de $50 \times 10^{-6}$ Hz.

On connaît d'après le document US-A-3 266 024 ou le document US-A-3 576 570 un circuit numérique de synchronisation d'informations reçues depuis un équipement distant contenant un compteur qui compte les périodes d'une onde locale d'une fréquence plus élevée que celle de l'horloge de la transmission et qui est remis à zéro par un signal dérivé des transitions du signal d'entrée. Ces dispositifs connus ne permettent pas de récupérer un signal d'horloge commun à ces signaux.

La présente invention a pour objet de fournir le circuit d'un tel dispositif de reconstitution de signal d'horloge adapté à la réception de plusieurs signaux numériques dérivant d'un signal codé ternaire (par exemple HDB 3), permettant à la fois d'effectuer des rattrapages de gigue importants, et de produire un signal d'horloge commun aux signaux récupérés.

Le dispositif de reconstitution de signal d'horloge de l'invention est caractérisé comme indiqué dans la revendication 1.

Les objets et caractéristiques de la présente invention apparaîtront plus clairement à la lecture de la description suivante d'un exemple de réalisation, ladite description étant faite en relation avec les dessins ci-annexés dans lesquels:

- la fig. 1 représente l'environnement d'un dispositif de reconstitution d'horloge dans un récepteur de transmission de données;
- la fig. 2 représente le schéma d'un dispositif de reconstitution d'horloge, conforme à l'invention;
- la fig. 3 représente les diagrammes des temps correspondant au fonctionnement du dispositif de la fig. 2;
- la fig. 4 représente deux exemples de rattrapage de gigue.

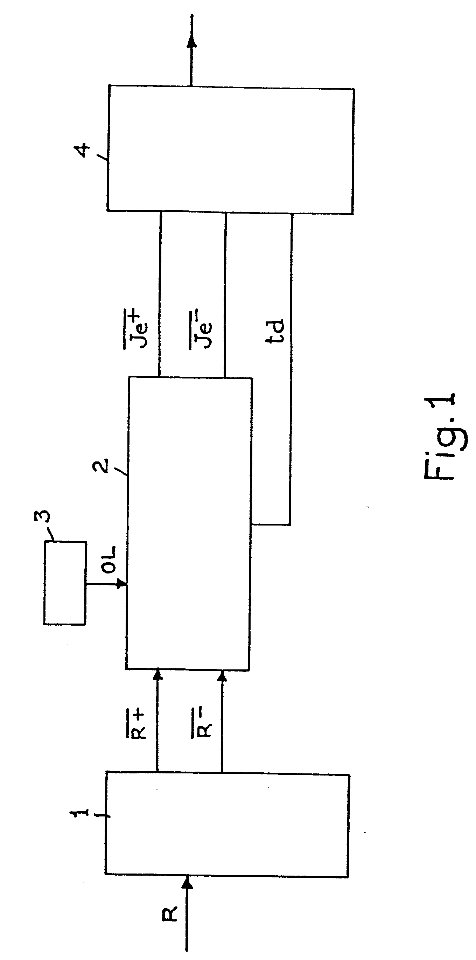

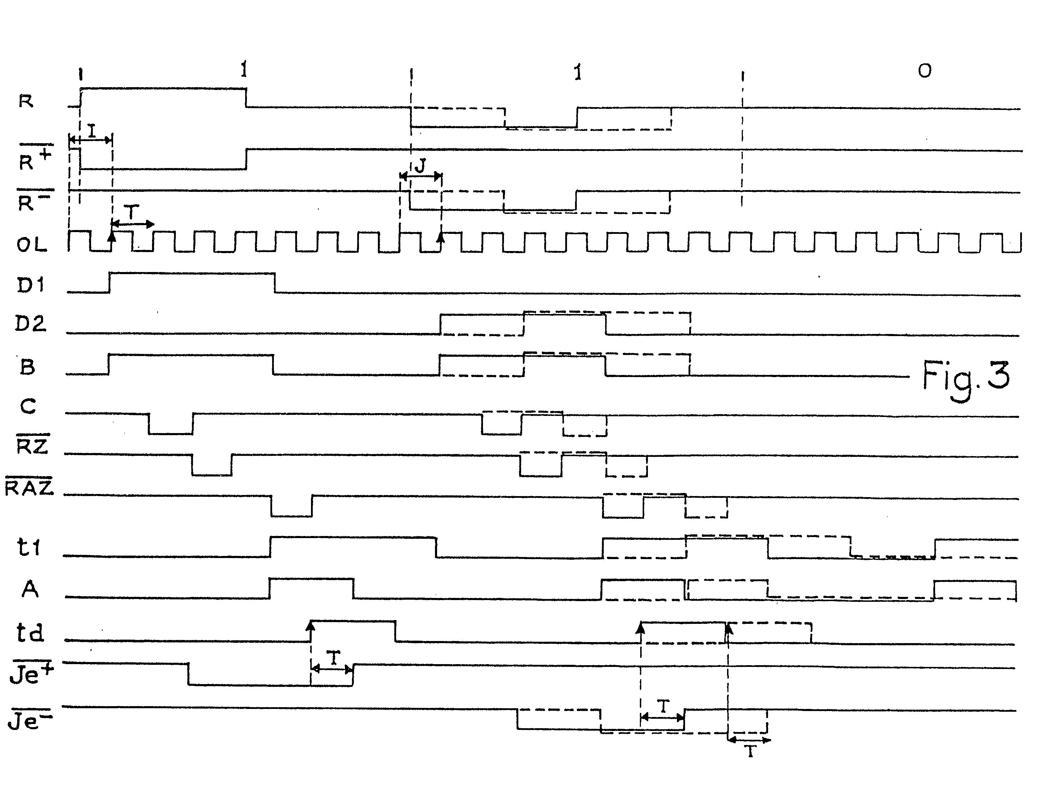

Pour la transmission les données sont codées suivant le code HDB3. A la fig. 1, le récepteur comporte en premier lieu une interface 1 de réception qui reçoit les signaux R codés en HDB3 et qui fournit deux signaux $\bar{R}^+$ et $\bar{R}^-$ numériques qui correspondent respectivement aux impulsions de polarité positive et aux impulsions de polarité négative; les signaux R, $\bar{R}^+$ et $\bar{R}^-$ sont représentés aux trois premières lignes de la fig. 3.

Ces signaux $\bar{R}^+$ et $\bar{R}^-$ sont transmis au dispositif 2 de reconstitution d'horloge qui fournit trois signaux: td qui est le signal d'horloge distante reconstituée, $\overline{Je}^+$ qui correspond à $\bar{R}^+$ et $\overline{Je}^-$ qui correspond à $\bar{R}^-$. Le dispositif 2 reçoit également le signal OL d'un oscillateur local 3.

Les signaux td, $\overline{Je}^+$ et $\overline{Je}^-$ sont transmis à un circuit 4 terminal de réception qui assure le décodage des signaux et leur resynchronisation par rapport à l'horloge locale, avant leur utilisation.

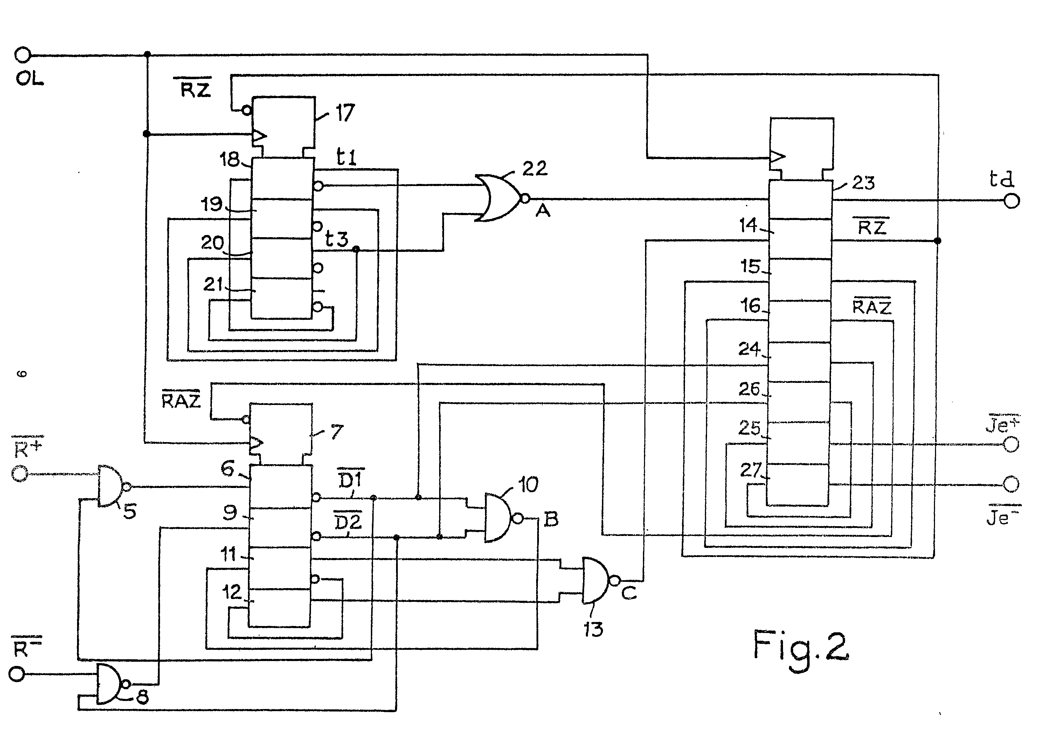

La fig. 2 représente le dispositif 2 de reconstitution d'horloge de façon détaillée. Il est entièrement numérique, en effet il est composé uniquement de portes logiques et de bascules de type D, ces dernières recevant toutes en entrée d'horloge le signal OL de l'oscillateur local 3 et fonctionnant sur les fronts montants de celui-ci.

Dans l'exemple décrit, la fréquence nominale de l'oscillateur local étant F, la fréquence nominale f de l'horloge distante au rythme de laquelle sont transmises les données R est égale à F/8.

Le dispositif comporte une première porte «NON-ET» 5 qui reçoit sur l'une de ses entrées le signal $\bar{R}^+$ et dont la sortie est reliée à l'entrée d'une bascule 6 d'un registre 7, la sortie inversée de cette bascule 6 étant reliée à l'autre entrée de la porte «NON-ET» 5.

De même, le dispositif comporte une seconde porte «NON-ET» 8 qui reçoit sur l'une de ses entrées le signal $\bar{R}^-$ et dont la sortie est reliée à l'entrée d'une bascule 9 du registre 7, la sortie inversée de cette bascule 9 étant reliée à l'autre entrée de la porte «NON-ET» 8.

Les sorties inversées des bascules 6 et 9 sont reliées aux entrées d'une porte «NON-ET» 10 dont la sortie est reliée à l'entrée d'une bascule 11 du registre 7; la sortie inversée de la bascule 11 est reliée à l'entrée d'une bascule 12 du registre 7 et les sorties des bascules 11 et 12 sont reliées aux entrées d'une porte «NON-ET» 13 dont la sortie fournit un signal C.

A la fig. 3, on a représenté le signal D1 issu de la bascule 6, le signal D2 issu de la bascule 9 ainsi que le signal B issu de la porte 10 et qui est égal à D1 + D2 et le signal C qui est issu de la porte 13.

Chaque fois que se présente en entrée du dispositif le premier front d'une impulsion de l'un ou l'autre des signaux $\bar{R}^+$ ou $\bar{R}^-$, on obtient en sortie de la porte 13 une impulsion de largeur une période T de l'oscillateur local.

Le signal C est décalé dans le temps de trois périodes T à l'aide de trois bascules 14, 15 et 16. La bascule 14 a son entrée reliée à la sortie de la porte 13, la bascule 15 a son entrée reliée à la sortie de la bascule 14 et la bascule 16 a son entrée reliée à la sortie de la bascule 15 et sa sortie reliée à l'entrée de remise à zéro du registre 7.

Le signal $\overline{RAZ}$ de remise à zéro du registre 7, issu de la bascule 16 est représenté à la fig. 3. Ce

signal $\overline{RAZ}$ permet de calibrer les impulsions des signaux $\overline{D1}$ et $\overline{D2}$ qui ont donc pour largeur quatre périodes T de l'oscillateur local. Ce calibrage des signaux $\overline{D1}$ et $\overline{D2}$, par rapport aux impulsions de largeur variable des signaux $\bar{R}^+$ et $\bar{R}^-$, permet un fonctionnement exempt de risque d'erreur.

Il faut noter que l'impulsion du signal D1 est identique quel que soit l'instant où se produit le premier front de l'impulsion de $\bar{R}^+$ dans l'intervalle I, représenté sur la Fig. 3. De même, le signal D2 est identique quel que soit l'instant où se produit le front de $\bar{R}^-$ dans l'intervalle J.

Pour générer le signal d'horloge, le dispositif comporte un registre 17 de mémorisation à quatre bascules, la sortie de la première bascule 18 étant reliée à l'entrée de la seconde 19, la sortie de la seconde 19 étant reliée à l'entrée de la troisième 20, la sortie de la troisième 20 étant reliée à l'entrée de la quatrième 21 et la sortie inversée de la quatrième 21 étant reliée à l'entrée de la première 18.

Ce registre 17 fonctionne ainsi en diviseur de fréquence par 8, en effet les signaux issus des bascules 18, 19, 20 et 21 (ainsi t1 issu de la bascule 18) ont une fréquence égale à f c'est-à-dire F/8. Le signal t1 est représenté à la fig. 3.

Le signal t1 ayant une forme très variable suivant la gigue, on crée à l'aide de la porte «NON-ET» 22, qui reçoit le signal $\overline{t1}$ issu de la sortie inversée de la bascule 18 et le signal t3 issu de la sortie de la bascule 20, un signal A qui a une largeur fixe et égale à deux périodes T de l'oscillateur local.

La sortie de la porte 22 est reliée à l'entrée d'une bascule 23 qui décale le signal A d'une période fournissant ainsi le signal td d'horloge distante reconstituée.

Le signal d'horloge étant généré, il faut le synchroniser avec les signaux reçus; pour cette raison, la sortie de la bascule 14 est reliée à l'entrée de remise à zéro du registre 17. Le signal $\overline{RZ}$ issu de la bascule 14, de remise à zéro du registre 17 est représenté à la fig. 3. Ainsi à chaque premier front d'une impulsion de $\bar{R}^+$ ou $\bar{R}^-$ le signal d'horloge td est resynchronisé et en l'absence d'impulsion le signal td continue à être fourni par le registre 17.

Enfin, on désire obtenir un rattrapage de gigue le meilleur possible, or, celui-ci est obtenu quand le signal d'horloge td pointe les informations le plus tard possible, c'est-à-dire lorsque le front montant de td est situé une période T de l'oscillateur local avant le deuxième front des impulsions des informations. C'est pourquoi, les signaux d'informations sont décalés jusqu'à cette position optimum par rapport au signal d'horloge td.

Ainsi, le signal $\overline{D1}$ est décalé de deux périodes T par les bascules 24 et 25, l'entrée de la bascule 24 étant reliée à la sortie inversée de la bascule 6, l'entrée de la bascule 25 étant reliée à la sortie de la bascule 24 et la sortie de la bascule 25 fournissant le signal d'informations $\overline{Je}^+$ correctement pointé par le signal d'horloge td.

De même, le signal $\overline{D2}$ est décalé de deux périodes T par les bascules 26 et 27, l'entrée de la bascule 26 étant reliée à la sortie inversée de la bascule 9, l'entrée de la bascule 27 étant reliée à la sortie de la bascule 26 et la sortie de la bascule 27 fournissant le signal d'informations $\overline{Je}^-$ correctement pointé par le signal td.

A la fig. 3, les signaux ont été tracés en trait plein dans le cas où il n'y a de gigue, par contre on a représenté en trait pointillé un cas de fonctionnement où il y a gigue et plus exactement un cas où le signal $\bar{R}^-$ est retardé de deux périodes T par rapport au fonctionnement exempt de gigue. Les impulsions relatives à $\bar{R}^-$ sont toutes décalées de deux périodes dans les signaux représentés et l'horloge td est aussitôt resynchronisée.

D'autre part, pour savoir quelle est la gigue admissible par ce dispositif, il faut se placer dans les plus mauvaises conditions pour reconstituer l'horloge distante. En transmission suivant le code HDB3, ce cas limite est la transmission de trois «0» suivis d'un «1».

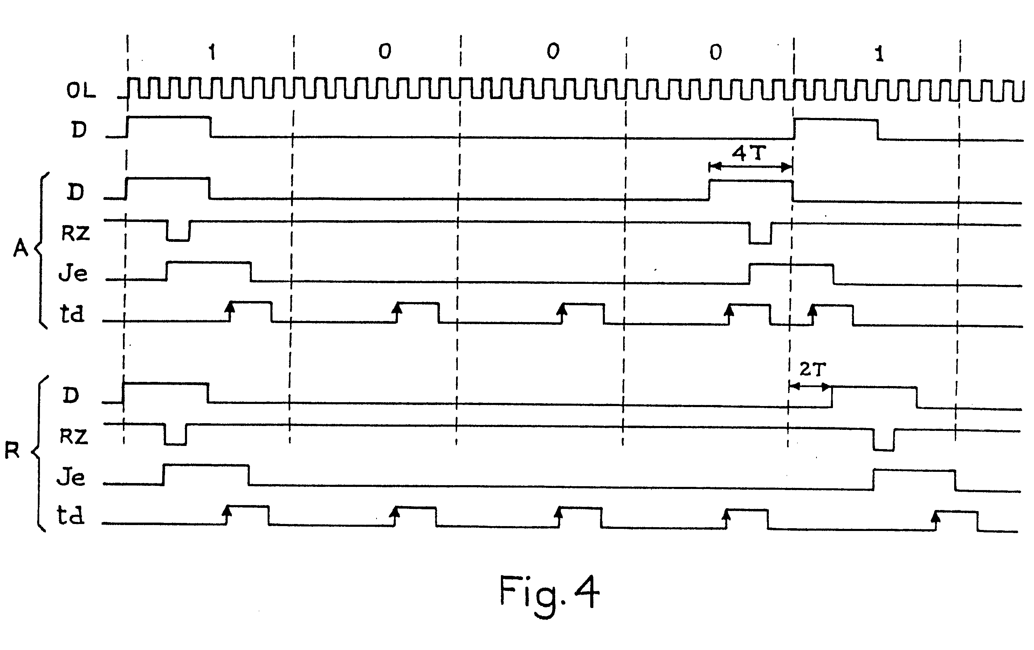

La fig. 4 représente les diagrammes des temps dans ce cas limite.

La première ligne représente le signal de l'oscillateur local, et la seconde le signal D d'information après régénération, qui présente un «1» suivi de trois «0», eux-mêmes suivis d'un «1», sur cette ligne le signal D est sans gigue.

Les quatre lignes suivantes réunies par une accolade précédée de la lettre A représentent l'allure des signaux lorsque le signal d'information D est en avance par rapport à l'oscillateur. La situation figurée est celle du rattrapage de gigue maximum, en effet, au-delà, l'horloge td ne peut plus être correctement resynchronisée. Le signal de remise à zéro $\overline{RZ}$ limite la gigue admissible à moins quatre fois la période T (–4T) de l'oscillateur local.

Les quatre dernières lignes réunies par une accolade précédée de la lettre R représentent l'allure des signaux lorsque le signal d'information D présente le maximum de gigue admissible en retard, cette gigue étant limitée par le signal de remise à zéro $\overline{RZ}$ à plus deux fois la période T (+2T) de l'oscillateur local.

La gigue admissible sur quatre éléments binaires est donc de $-4T$ et $+2T$. La gigue étant symétrique les caractéristiques se ramènent à $\pm$ 2T, soit 4T crête-crête.

Dans ces deux cas de gigue, l'horloge td est remise en phase lorsque des impulsions se présentent et, en l'absence d'impulsion, l'horloge td est donnée par le registre 17.

Le dispositif proposé par l'invention étant de type numérique, c'est-à-dire ne comprenant que des composants à semi-conducteurs, il peut être entièrement intégré dans le même boîtier et le dispositif de reconstitution d'horloge se présente alors sous la forme d'un seul circuit intégré.

D'autre part, le dispositif étant totalement indépendant de la phase de l'oscillateur local, on peut soit utiliser un même oscillateur local pour plusieurs dispositifs de reconstitution d'horloge, soit utiliser l'horloge distante reconstituée par un premier dispositif comme signal local pour un second dispositif.

## Revendications

1. Dispositif de reconstitution de signal d'horloge distante à partir d'un ou plusieurs signaux numériques reçus ($\bar{R}^+$, $\bar{R}^-$), comportant des premiers moyens (17, 22) d'élaboration d'un signal d'horloge de même fréquence nominale f que le signal d'horloge distante, à partir du signal fourni par un oscillateur local (OL) de fréquence nominale F, F étant égale à nf, n étant pair et supérieur ou égal à huit, et ces premiers moyens (17, 22) comportant une entrée de remise à zéro, des deuxièmes moyens (5, 7, 8, 10, 13–16) comportant d'une part des moyens de détection et de régénération (5, 6, 8, 9) des impulsions du ou des signaux reçus ($\bar{R}^+$, $\bar{R}^-$) et des moyens d'élaboration (10–13) d'une impulsion de synchronisation (C) à la suite de chaque détection d'un premier front d'impulsions, des troisièmes moyens (24–27) de pointage des impulsions régénérées comportant un premier circuit de décalage (23) et un second circuit de décalage (24–27), le décalage étant choisi de telle sorte que le signal d'horloge reconstituée (td) pointe les impulsions des signaux retardés ($\overline{Je}^+$, $\overline{Je}^-$) issus du second circuit (24–27), caractérisé en ce que le signal d'horloge reconstituée (td) pointe les impulsions des signaux retardés ($\overline{Je}^+$, $\overline{Je}^-$) une période de l'oscillateur local (OL) avant la fin de chaque impulsion, qu'il y a deux entrées pour les signaux reçus ($\bar{R}^+$, $\bar{R}^-$), que les moyens de détection et de régénération (5, 6, 8, 9) des signaux reçus ($\bar{R}^+$, $\bar{R}^-$) sont constitués pour chaque signal reçu (resp. $\bar{R}^+$, $\bar{R}^-$) par une porte «NON-ET» (resp. 5, 8) dont l'une des entrées reçoit ce signal et par une bascule (resp. 6, 9) dont l'entrée est reliée à la sortie de la porte «NON-ET» et dont la sortie inversée est reliée à l'autre entrée de la porte «NON-ET» (resp. 5, 8), que les deuxièmes moyens (5, 7, 8, 10, 13–16) comportent d'autre part des moyens d'élaboration (10–13) d'impulsions de synchronisation (C) qui sont constitués par une première porte «NON-ET» (10) dont les entrées sont reliées aux sorties inversées des bascules (6, 9) des moyens de détection, par une première bascule (11) dont l'entrée est reliée à la sortie de la première porte «NON-ET» (10), par une seconde bascule (12) dont l'entrée est reliée à la sortie inversée de la première bascule (11), les bascules (6, 9) des moyens de détection et de régénération ainsi que la première (11) et la seconde (12) bascule faisant partie d'un même registre de mémorisation (7) dont l'entrée d'horloge est reliée à l'oscillateur local (OL), par une seconde porte «NON-ET» (13) dont les entrées sont reliées aux sorties de la première (11) et de la seconde (12) bascule, que les deuxièmes moyens (5, 7, 8, 10, 13–16) comportent d'autre part un ensemble de bascules de décalage (14–16) dont les entrées d'horloge sont reliées à l'oscillateur local (OL), la première (14) ayant son entrée reliée à la sortie de la seconde porte «NON-ET» (13) et sa sortie reliée à l'entrée de remise à zéro des premiers moyens (17, 22), la deuxième bascule (16) de l'ensemble ayant son entrée reliée à la sortie de la première (14) et sa sortie reliée à l'entrée de la troisième bascule (16) de l'ensemble et ainsi de suite jusqu'à la (n/2–1)ième et dernière bascule de l'ensemble dont la sortie est reliée à l'entrée de remise à zéro du registre de mémorisation (7) des moyens de détection et de régénération (5, 6, 8, 9) et des moyens d'élaboration (10–13) d'une impulsion de synchronisation (C).

2. Dispositif de reconstitution de signal d'horloge selon la revendication 1, caractérisé en ce que le premier circuit de décalage (23) des troisièmes moyens (23–27) est constitué par un registre à décalage de (n/2–3) bascules dont l'entrée d'horloge est reliée à l'oscillateur local, dont l'entrée est reliée à la sortie (A) des premiers moyens (17, 22) et dont la sortie fournit le signal d'horloge distante reconstituée (td), et en ce que le second circuit de décalage (24–27) des troisièmes moyens (23–27) est constitué, pour chaque signal reçu, par un registre à décalage (resp. 24 et 25, 26 et 27) dont l'entrée est reliée à la sortie de la bascule correspondante (resp. 6, 9) du registre de mémorisation (7) des deuxièmes moyens (5, 7, 8, 10, 13–16), les registres à décalage du second circuit (24–27) ayant leurs entrées d'horloge reliées à l'oscillateur local et comportant chacun (n/2–2) bascules, dont la dernière fournit en sortie les signaux d'information régénérés et retardés (resp. $\overline{Je}^+$, $\overline{Je}^-$).

3. Dispositif de reconstitution de signal d'horloge selon l'une des revendications 1 ou 2, caractérisé en ce qu'il est intégré dans un boîtier unique.

4. Dispositif de reconstitution de signal d'horloge selon l'une quelconque des revendications précédentes, caractérisé en ce que le même oscillateur local est utilisé pour plusieurs dispositifs de reconstitution.

5. Dispositif de reconstitution de signal d'horloge selon l'une quelconque des revendications 1 à 3, caractérisé en ce que l'horloge distante reconstituée par un premier dispositif est utilisée par un second dispositif comme signal local.

## Claims

1. Device for restoring distant clock signal from one or several digital signals ($\bar{R}^+$, $\bar{R}^-$) received, comprising first elaboration means (17, 22) of a clock signal of the same nominal frequency f as the distant clock signal, from the signal supplied by a local oscillator (OL) of nominal frequency F, f being equal to nf, n being even and superior or equal to eight, and these first means (17, 22) comprising a back to zero input, second means (5, 7, 8, 10, 13–16) comprising, on the one hand, detection and regeneration means (5, 6, 8, 9) of the impulses of the signal(s) received ($\bar{R}^+$, $\bar{R}^-$) and elaboration means (10–13) of a synchronization impulse (C) following each detection of a first impulse front, third checking means (24–27) of the regenerated impulses comprising a first shifting circuit (23) and a second shifting circuit (24–27), the shifting being chosen so that the reconstituted clock signal (td) checks the delayed signals impul-

ses ($\overline{\text{Je}}^+$, $\overline{\text{Je}}^-$) issuing from the second circuit (24–27) characterized in that the reconstituted clock signal (td) checks the delayed signals impulses ($\overline{\text{Je}}^+$, $\overline{\text{Je}}^-$) a period of the local oscillator (OL) before the end of each impulse, that there are two inputs for the signals received ($R^+$, $R^-$), that the detection and regeneration means (5, 6, 8, 9) of the signals received ($\bar{R}^+$, $\bar{R}^-$) are constituted for each received signal (resp. $\bar{R}^+$, $\bar{R}^-$) by a NO-AND gate (resp. 5, 8) one input of which receives this signal and a flip-flop (resp. 6, 9) the input of which is connected to the output of the NO-AND gate and the reversed output of which is connected to the other input of the NO-AND gate (resp. 5, 8) that the second means (5, 7, 8, 10, 13–16) comprise, on the other hand, elaboration means (10–13) of synchronization impulses (C) that are constituted by a first NO-AND gate (10) the inputs of which are connected to reversed outputs of the flip-flops (6, 9) of the detection means, by a first flip-flop (11) the input of which is connected to the output of the first NO-AND gate (10), by a second flip-flop (12) the input of which is connected to the reversed input of the first flip-flop (11), the flip-flops (6, 9) of the detection and regeneration means as well as the first (11) and second (12) flip-flop forming part of a single memorization register (7) the clock input of which is connected to the local oscillator (OL) by a second NO-AND gate (13) the inputs of which are connected to the outputs of the first (11) and the second (12) flip-flop and that the second means (5, 7, 8, 10, 13–16) comprise, on the other hand, an assembly of shifting flip-flops (14–16) the clock inputs of which are connected to the local oscillator (OL) the first (14) having its input connected to the output of the second NO-AND gate (13) and its output connected to the back to zero input of the first means (17, 22), the second flip-flop (15) of the assembly having its input connected to the output of the first (14) and its output connected to the input of the third flip-flop (16) of the assembly and so on until the (n/2–1)th and last flip-flop of the assembly the output of which is connected to the input of the back to zero of the memorization register (7) of the detection and regeneration means (5, 6, 8, 9) and of elaboration means (10–13) of a synchronization impulse (C).

2. Device for restoring clock signal according to claim 1, in which the first shifting circuit (23) of the third means (23–27) is constituted by a shifting register of (n/2–3) flip-flops the clock input of which is connected to the local oscillator, the input of which is connected to the output (A) of the first means (17, 22) and the output of which supplies the restored distant clock signal (td) and in that the second shifting circuits (24–27) of the third means (23–27) is constituted, for each signal received, by a shifting register (resp. 24 and 25, 26 and 27) the input of which is connected to the output of the corresponding flip-flop (resp. 6, 9) of the memorization register (7) of the second means (5, 7, 8, 10, 13–16) the shifting registers of the second circuit (24–27) having their clock inputs connected to the local oscillator and each comprising (n/2–2) flip-flops, the last of which supplies at output the signals of regenerated and delayed datas (resp. $\overline{\text{Je}}^+$, $\overline{\text{Je}}^-$).

3. Device for restoring clock signal according to one of claims 1 to 2, characterized in that it is integrated in a single housing.

4. Device for restoring clock signal according to any one of the preceding claims, characterized in that the same local oscillator is used for several restoring devices.

5. Device for restoring clock signal according to any one of claims 1 to 3, characterized in that the distant clock restored by a first device is used by a second device as local signal.

**Patentansprüche**

1. Vorrichtung zur Wiederherstellung eines Fernzeitgebersignals aufgrund eines oder mehrerer empfangener numerischer Signale ($\bar{R}^+$, $\bar{R}^-$), mit ersten Mitteln (17, 22) zur Erzeugung eines Zeitgebersignals mit der gleichen Frequenz f wie das Fernzeitgebersignal aufgrund eines von einem örtlichen Oszillator (OL) gelieferten Signals mit einer nominalen Frequenz F, wobei F gleich nf ist, wo n eine gerade Zahl von mehr als acht ist, und wobei diese ersten Mittel (17, 22) einen Nullrückstelleingang besitzen, und mit zweiten Mitteln (5, 7, 8, 10, 13–16), die einerseits Mittel (5, 6, 8, 9) zur Ermittlung und Regenerierung von Signalen ($\bar{R}^+$, $\bar{R}^-$) oder Impulsen besitzen, die von Mitteln (10–13) übertragen werden, welche bei jeder Ermittlung einer ersten Impulsflanke einen Synchronisierungsimpuls (IC) erzeugen, sowie mit dritten Mitteln (24–27) zur Kontrolle der regenerierten Impulse, welch dritte Mittel einen ersten Verschiebungskreis (23) und einen zweiten Verschiebungskreis (24–27) umfassen, wobei die Verschiebung derart gewählt ist, dass das wiederhergestellte Zeitgebersignal (td) die Impulse der vom zweiten Stromkreis ausgehenden verzögerten Signale ($\overline{\text{Je}}^+$, $\overline{\text{Je}}^-$) kontrolliert, dadurch gekennzeichnet, dass das wiederhergestellte Zeitgebersignal (td) die Impulse der verzögerten Signale ($\overline{\text{Je}}^+$, $\overline{\text{Je}}^-$) eine Periode des örtlichen Oszillators (OL) vor dem Ende jedes Impulses kontrolliert, dass zwei Eingänge für die empfangenen Signale ($\bar{R}^+$, $\bar{R}^-$) vorgesehen sind, dass die Mittel (5, 6, 8, 9) zur Ermittlung und Regenerierung der empfangenen Signale ($\bar{R}^+$, $\bar{R}^-$) bezüglich eines jeden empfangenen Signals ($\bar{R}^+$ bzw. $\bar{R}^-$) durch ein «NEIN-UND»-Gatter (5 bzw. 9) gebildet sind, dessen einer Eingang dieses Signal empfängt, und durch eine Kippschaltung (6 bzw. 9) deren Eingang mit dem Ausgang des «NEIN-UND»-Gatters verbunden ist, und dessen umgepolter Ausgang mit dem anderen Eingang des «NEIN-UND»-Gatters (5 bzw. 8) verbunden ist, dass die zweiten Mittel (5, 7, 8, 10, 13–16) anderseits Mittel (10–13) zur Erzeugung von Synchronisierungsimpulsen (IC) besitzen, die bestehen aus einem ersten «NEIN-UND»-Gatter (10), dessen Eingänge mit den umgepolten Ausgängen der Kippschaltungen (6, 9) der Ermittlungsmittel verbunden sind, aus einer ersten Kippschaltung (11), deren Eingang mit dem Ausgang des ersten «NEIN-UND»-Gatters (10) verbunden ist, und aus einer zweiten Kippschaltung (12), deren Eingang mit dem umgepolten Ausgang der ersten Kippschaltung (11) verbunden ist, während die Kippschaltungen (6, 9) der Ermittlungs- und Regenerierungsmittel, sowie die erste (11) und die zweite (12) Kippschaltung einem Speicherregister (7) zugehörig sind, dessen Zeitgebereingang mit dem örtlichen Oszillator (OL) über ein zweites «NEIN-UND»-Gatter (13) verbunden ist, dessen Eingänge an die Ausgänge der ersten (11) und der zweiten (12) Kippschaltung angeschlossen sind, und dass die zweiten Mittel (5, 7, 8, 10, 13–16) ferner eine Gruppe von Verschiebungs-Kippschaltungen (14–16) umfassen, deren Zeitgebereingänge mit dem örtlichen Oszillator (OL) verbunden sind, wobei der Eingang der ersten (14) dieser Kippschaltungen mit dem Ausgang des zweiten «NEIN-UND»-Gatters (13) und ihr Ausgang mit dem Nullrückstelleingang der ersten Mittel (17, 22) verbunden ist, und wobei der Eingang der zweiten Kippschaltung (15) der Gruppe mit dem Ausgang der dritten Kippschaltung (16) der Gruppe verbunden ist, und so fort, bis zur (n/2–1)ten und letzten Kippschaltung der Gruppe, deren Ausgang mit dem Nullrückstelleingang des Speicherregisters (7) der Ermittlungs- und Regenerierungsmittel (5, 6, 8, 9) und der Mittel (10–13) zur Erzeugung eines Synchronisierungsimpulses verbunden ist.

2. Zeitgebersignal-Wiederherstellungsvorrichtung nach Anspruch 1, dadurch gekennzeichnet, dass der erste Verschiebungskreis (23) der dritten Mittel (23-27) gebildet ist durch ein Verschiebungsregister mit (n/2–3) Kippschaltungen, dessen Zeitgebereingang mit dem örtlichen Oszillator verbunden ist, dessen Eingang mit dem Ausgang (A) der ersten Mittel (17, 22) verbunden ist und dessen Ausgang das wiederhergestellte Fernzeitgebersignal (td) abgibt, und dass der zweite Verschiebungskreis (24–27) der dritten Mittel (23–29) bezüglich eines jeden empfangenen Signals gebildet ist durch ein Verschiebungsregister (24 und 25 bzw. 26 und 27), dessen Eingang mit dem Ausgang der entsprechenden Kippschaltung (6 bzw. 9) des Speicherregisters (7) der zweiten Mittel (5, 7, 8, 10, 13–16) verbunden ist, wobei die Verschiebungsregister des zweiten Stromkreises (24–27) an ihren Zeitgebereingängen mit dem örtlichen Oszillator verbunden sind und je (n/2–2) Kippschaltungen aufweisen, deren letzte an ihrem Ausgang die regenerierten und verzögerten Signale ($\overline{Je}^+$ bzw. $\overline{Je}^-$) abgibt.

3. Zeitgebersignal-Wiederherstellungsvorrichtung nach einem der Ansprüche 1 oder 2, dadurch gekennzeichnet, dass sie in einem einzigen Gehäuse angeordnet ist.

4. Zeitgebersignal-Wiederherstellungsvorrichtung nach einem der vorstehenden Ansprüche, dadurch gekennzeichnet, dass für mehrere Wiederherstellungsvorrichtungen ein und derselbe örtliche Oszillator verwendet wird.

5. Zeitgebersignal-Wiederherstellungsvorrichtung nach einem der Ansprüche 1 bis 3, dadurch gekennzeichnet, dass das mittels einer ersten Vorrichtung wiederhergestellte Fernzeitgebersignal von einer zweiten Vorrichtung als örtliches Signal verwendet wird.

Fig.1

Fig.2

0 016 678

Fig. 3

Fig. 4